# EUROPÄISCHE PATENTSCHRIFT

(11) **EP 2 032 412 B1**
(45) Veröffentlichungstag und Bekanntmachung des Hinweises auf die Patenterteilung: **23.09.2009**
(21) Anmeldenummer: 07725401.9
(22) Anmeldetag: 21.05.2007
(51) Int. Cl.: B62B 13/12

(54) **LENKBARER SCHLITTEN MIT ZWEI KUFEN**
STEERABLE SLEDGE COMPRISING TWO RUNNERS
LUGE DIRIGEABLE ÉQUIPÉE DE DEUX PATINS

(30) Priorität: 25.05.2006 DE 102006024926
(43) Veröffentlichungstag der Anmeldung: 11.03.2009
(73) Patentinhaber: Mierswa, Aurélien, 68199 Mannheim (DE)
(72) Erfinder: Mierswa, Aurélien, 68199 Mannheim (DE)
(74) Vertreter: Mierswa, Klaus
(86) Internationale Anmeldenummer: PCT/EP2007/004494
(87) Internationale Veröffentlichungsnummer: WO 2007/137723

(56) Entgegenhaltungen:
- DE-A1- 2 526 169
- DE-A1- 2 820 803
- DE-A1- 10 326 588
- DE-A1- 19 705 060
- US-A- 3 528 674

## Beschreibung

### Technisches Gebiet:

Die Erfindung betrifft einen lenkbaren Schlitten mit zwei Kufen, auf denen sich je eine nach oben gerichtete Strebe oder eine Wandung erhebt, zwischen denen zur Halterung der Kufen sich eine Quertraverse erstreckt, an welcher eine Sitzschale befestigt ist, welche sich im Bereich ihres hinteren Endes beidseitig auf den Kufen abstützt, welche zumindest an ihren vorderen Enden nach oben gekrümmt sind, gemäß dem Oberbegriff des Anspruchs 1.

### Stand der Technik:

Es existiert eine Vielzahl von technischen Konzepten für lenkbare Schlitten mit nur zwei Kufen. Es ist zum Beispiel bekannt, zwei biegsame Kufen an zwei hintereinander stehenden drehbaren Gabeln zu befestigen, deren Drehachse wie beim Zweirad um wenige Winkelgrade nach hinten geneigt sind (Vorlauf). Durch gegenläufiges Verschieben verdrehen sich die beiden Kufen um ihre Längsachse und bewirken so die Kurvenfahrt. Zum Verschieben der Kufen sind in der Mitte zwei Handgriffe und an den vorderen Kufenenden zwei U-förmige Bügel zum Einhaken der Füße angebracht. Um die Kufen gegeneinander zu verschieben, muss der Fahrer mit den Füßen Druck auf eine der Kufenspitzen ausüben. Hierdurch wird das Verbiegen der Kufe unterdrückt. Es können also in nachteiliger Weise nur größere Radien gefahren werden. Des Weiteren verringert sich durch das Verdrehen der Gabeln zwangsläufig die Spurweite.

Durch die gattungsgemäße DE 10326588A1 ist ein Schlitten bekannt geworden mit einem besonderen geometrischen Prinzip des Sitzgestells. Dasselbe besteht aus einem Trapez mit der langen Seite oben und je einem Gelenk an den Ecken; zwei nach diesem Prinzip gebaute Teile, hintereinander stehend, bilden das Sitzgestell, das quer zur Spur neigbar ist. Die oberen Traversen tragen den Sitz. Die Kufen sind mit den Tragepfosten des Sitzgestells fest verbunden, ebenso links und rechts des Sitzes angeordnete Haltegriffe. Bei Neigung des Sitzgestells verdrehen sich die Kufen um ihre Längsachsen. Die Kufen sind wie Skier gebaut, also um ihre Querachse biegsam. Dieser Schlitten besitzt offensichtlich den Nachteil, dass der Fahrer nur mit den beiden Haltegriffen bei Gewichts- und Neigungsverlagerung lenken kann und der Schlitten deshalb zu "weich" und zu "sensibel" reagiert, d.h., dass schon eine geringe Neigung des Fahrers eine enge Kurve zur Folge hat und deshalb bei höheren Geschwindigkeiten der Fahrer leicht abgeworfen werden kann.

### Technische Aufgabe:

Der Erfindung liegt die Aufgabe zugrunde, einen lenkbaren Schlitten mit zwei Kufen zu schaffen, mit welchem sich insbesondere enge Kurven ohne größere Geschwindigkeitseinbuße fahren lassen und Richtungswechsel flüssig ablaufen, ähnlich wie beim Skilauf. Der Schlitten soll leicht zu beherrschen, gut zu tragen und auch mehrsitzig ausführbar sein, ebenso wie der Schlitten für unterschiedliche Schneezustände gleich gut geeignet sein soll.

### Lösung der Aufgabe und deren Vorteile:

Die Lösung der Aufgabe besteht bei einem Schlitten der eingangs genannten Gattung in den folgenden Merkmale:
- die Quertraverse ist gelenkig mit den Streben verbunden
- die Sitzschale ist im Bereich ihres vorderen Endes gelenkig drehbar um ihre Mittenlängsachse in der Mitte der Quertraverse an derselben gehaltert, so dass die Sitzschale längs um ihre Mittenlängsachse kippbar ist
- zum Abstützen des hinteren Endes der Sitzschale an den Kufen weisen die Kufen im Bereich ihrer hinteren Enden je eine Halterung auf, innerhalb oder an derselben jeweils eine beidseitig am hinteren Ende der Sitzschale angeordnete Gegenhalterung gehaltert ist
- die Gegenhalterungen sind gegenüber den an den Kufen angeordneten Halterungen in oder an denselben drehbar oder wenigstens tordierbar beweglich angeordnet
- so dass die Sitzschale endseitig mit zwei Aufhängepunkte drehbar an den Kufen und mit einem vorderen Aufhängepunkt gelenkig an der Quertraverse aufgehängt ist.

Der erfindungsgemäße Schlitten besitzt den Vorteil, dass mit demselben sich insbesondere Kurven in kontrollierter Weise ohne größere Geschwindigkeitseinbuße fahren lassen und Richtungswechsel flüssig und rasch ablaufen, wie beim Skilauf bzw. beim Snowboardfahren. Normalerweise hält sich der Fahrer links und rechts an der Sitzschale fest und lenkt den Schlitten mittels Gewichtsverlagerung nach rechts oder links. Ebenso kann der Schlitten freihändig gefahren und nur mit den Füßen gelenkt werden. Des Weiteren ist der Schlitten leicht zu beherrschen, aufgrund seines geringen Gewichts gut zu tragen und kann auch als Zweisitzer ausgeführt sein. Gleichermaßen hat sich gezeigt, dass der erfindungsgemäße Schlitten für unterschiedliche Schneezustände gleich gut geeignet ist. Die Kufen des Schlittens sind vorzugsweise identisch aufgebaut, so dass der Schlitten symmetrisch zu seiner senkrechten Mittenebene gestaltet ist. Dadurch ist auch eine einfache und preiswerte Herstellung des Schlittens gewährleistet.

In einer weiteren Ausführung der Erfindung des Schlittens ist die Quertraverse dreidimensional kippbar und schwenkbar elastisch mit den Streben oder der Wandung verbunden, wobei auch die Sitzschale mittels eines elastischen Puffergliedes oder eines Kugellagers oder Kardanlagers sowohl um die Mittenlängsachse der Sitzschale kippbar als auch schwenkbar bezüglich der Quertraverse elastisch mittig an derselben gehaltert ist. Auf diese Weise ist sowohl die Quertraverse bezüglich der Kufen nach oben oder unten sowie vor und zurück beweglich, wie auch die Sitzschale um die Mittenlängsachse, neben ihrer Kippbewegung, eine Schwenkbewegung auszuführen imstande ist. In weiterer Ausführung der Erfindung kann die Quertraverse mittels zweier endständig angeordneter Kardangelenke mit den Streben verbunden sein, wobei auch die Sitzschale mittels eines Kardangelenkes kippbar an der Quertraverse gehaltert ist. Insbesondere ist sowohl die Quertraverse elastisch beweglich mit den Streben als auch die Sitzschale elastisch beweglich mit der Quertraverse verbunden.

In einer weiteren Ausgestaltung des Schlittens besteht die elastische, bewegliche Verbindung der Quertraverse mit den Streben aus je wenigstens einem Elastikkörper zwischen den Enden der Quertraverse und den Streben, wobei die Quertraverse zwischen den Streben mittels je einer Schraube, wie Kopfschraube, gehaltert ist, welche durch je eine Durchgangsbohrung innerhalb der Streben mit Spiel geführt und in Gewindebohrungen der Quertraverse geschraubt ist.

In einer weiteren Ausgestaltung des Schlittens besteht die elastische Kipp-Schwenkverbindung der Sitzschale gegenüber der Quertraverse aus wenigstens einem Elastikkörper zwischen Sitzschale und Quertraverse, wobei die Quertraverse mittig eine Durchgangsbohrung aufweist, durch welche als Achse eine in Richtung der Mittenlängsachse der Sitzschale verlaufende Schraube, wie Kopfschraube, vorzugsweise mit Spiel, geführt ist, welche in eine Gewindebohrung innerhalb der Sitzschale geschraubt ist, wobei die Gewindebohrung sich vom vorderen Ende der Sitzschale längs der Mittellängsachse derselben erstreckt.

In weiterer Ausgestaltung sind die Streben schräg nach vorn oben geneigt gerichtet und teilen die Kufen je in einen vorderen Teil und einen hinteren Teil auf, wobei jeweils die Endbereiche der hinteren Teile der Kufen unter einem Winkel β von mehr als 90Grad jedoch weniger als 180Grad nach oben abgewinkelt sind unter Ausbildung eines Dreh- und Bremspunktes im Übergang zwischen den hinteren Teile der Kufen und den Endbereiche der hinteren Teile der Kufen bezüglich des Bodens.

In einer weiterer Ausgestaltung des Schlitten sind die endständig am hinteren Ende der Sitzschale angeordneten Bolzen unter einem Winkel α von 0Grad bis 45Grad bezüglich der hinteren Querachse der Sitzschale bzw. des hinteren Teils derselben schräg nach oben gerichtet, wobei die die Bolzen aufnehmenden Halterungen der Kufen unter einem gleichen Winkel zum Boden hin geneigt sind. Vorzugsweise verlaufen die Bolzen in senkrechter Projektion unter einem rechten Winkel zur Mittenlängsachse der Sitzschale.

In einer vorteilhaften Ausgestaltung des erfindungsgemäßen Schlittens liegen in senkrechter Draufsicht auf die Kufen die Halterungen der Kufen zur endseitigen Halterung der Sitzschale in rückwärtiger Richtung hinter den Dreh- und Bremspunkten der Kufen, wodurch zwischen Dreh- und Bremspunkt und der Halterung ein Hebelarm 1 ausgebildet wird; oder die Halterungen können mit den Endpunkten der Kufen zusammenfallen.

In einer weiteren Ausgestaltung des Schlittens sind die an ihren vorderen Enden schräg nach oben gebogenen Kufen hin zu den Streben schräg nach oben verlaufend mittels je einer Rückbiegungen rückgebogen und mit den Streben integral verbunden, wobei die Verbindungsteile zwischen Rückbiegungen und Streben als Haltebügel ausgebildet sind.

In einer weiteren Ausgestaltung des Schlittens sind die Streben nach oben zueinander hin nach innen gerichtet, wobei die Kufen gleichfalls dergestalt zueinander geneigt sind, dass diese nur auf den Innenkanten der Kufen laufen.

In einer weiteren Ausgestaltung des Schlittens sind die Streben sowie die Kufen unter einem Winkel α zwischen 0Grad bis 45Grad aus der Senkrechten heraus aufeinander zu geneigt, wobei die Kufen leicht konvex geformt sein können.

In weiterer Ausgestaltung des Schlittens sind die Gegenhalterungen Bolzen, welche die Enden einer Querachse bilden, welche sich am hinteren Teil der Sitzschale erstreckt und zur Mittenlängsachse derselben senkrecht verläuft.

In einer weiteren Ausgestaltung des Schlittens ist der hintere Teil der Sitzschale in Form einer Schürze nach hinten unten abgebogen, wobei die Abbiegung in senkrechter Projektion im Bereich der Dreh- und Bremspunkte der Kufen oder im Bereich der Abbiegungen der Endbereiche verläuft.

In einer weiteren Ausgestaltung des Schlittens bestehen die Kufen und die Sitzschale, gegebenenfalls auch die Quertraverse, aus einem Material, welches Karbon- oder Glasfasern oder beides enthält.

### Kurzbeschreibung der Zeichnung, in der zeigen:

- Figur 1: eine perspektivische Explosionsansicht des erfindungsgemäßen Schlittens

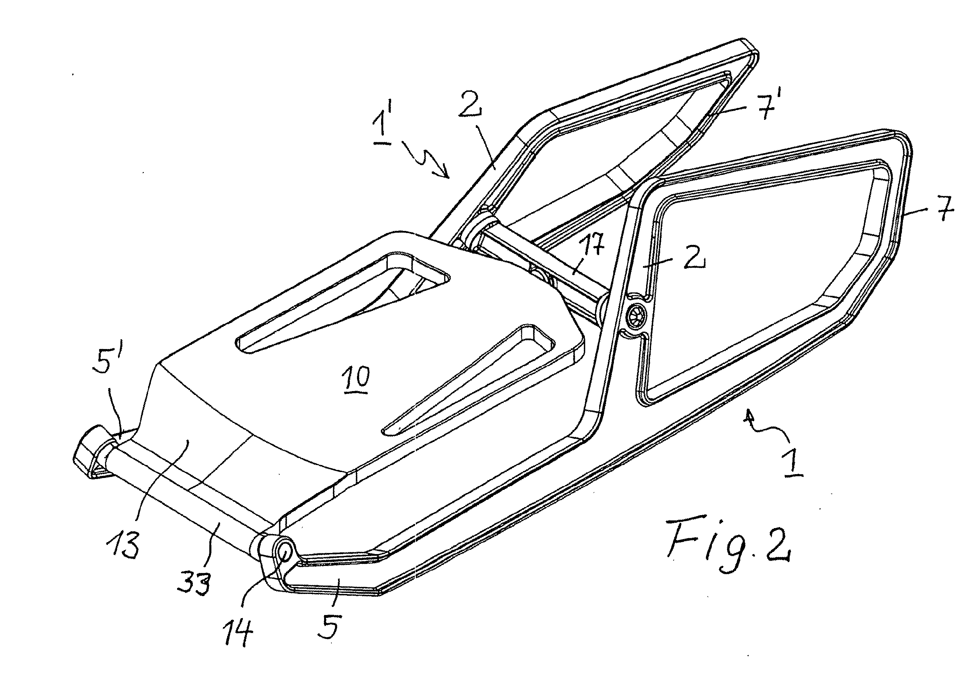

- Figur 2: eine perspektivische Ansicht des Schlittens im zusammengebauten Zustand schräg auf die Sitzschale

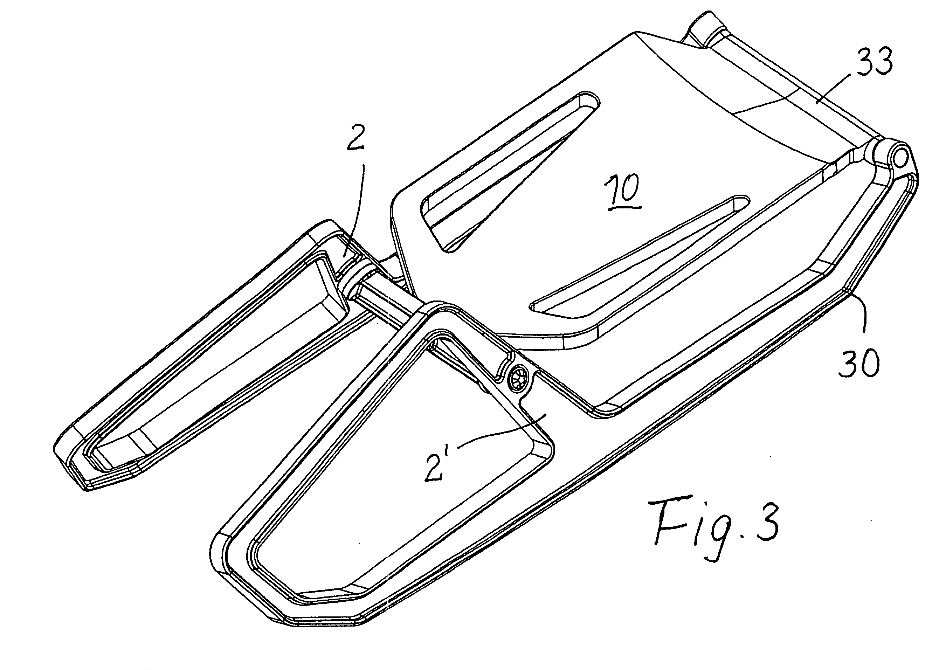

- Figur 3: eine weitere perspektivische Ansicht des Schlittens im zusammengebauten Zustand
- Figur 4: eine leicht perspektivische Seitenansicht des Schlittens zur Darstellung des Hebelarms I zur Lenkung des Schlittens
- Figur 5: eine Ansicht von vorn auf den Schlitten
- Figur 6: eine Ansicht von hinten auf den Schlitten
- Figur 7: eine Draufsicht von oben auf den Schlitten

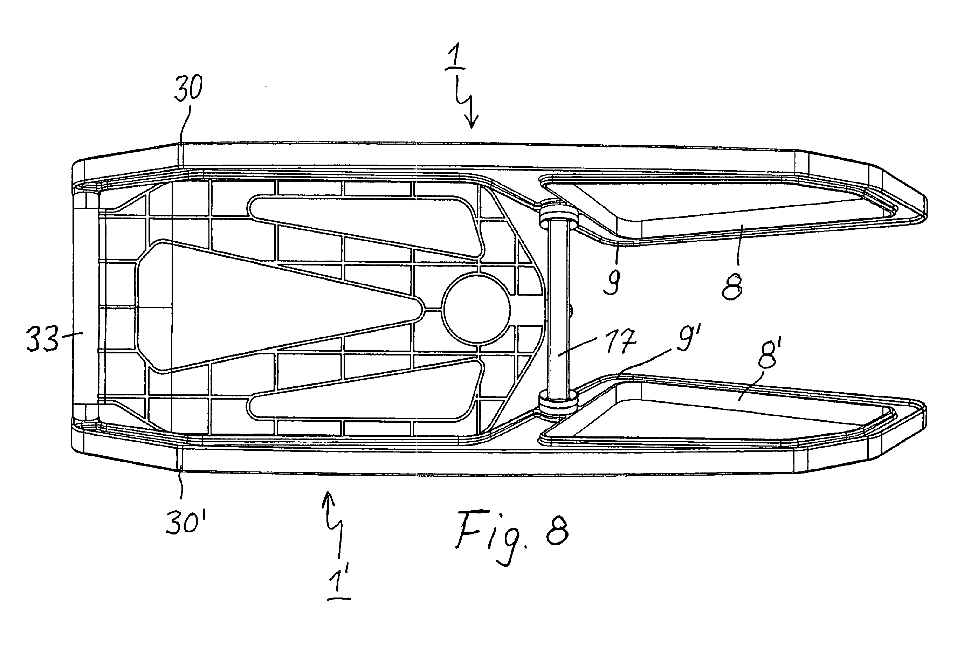

- Figur 8: eine Draufsicht von unten auf den Schlitten
- Figuren 9 a und b: eine Ansicht von vorn und von hinten auf den Schlitten in einer Linkskurve
- Figur 10: eine leicht perspektivische Seitenansicht des Schlittens in einer Linkskurve und
- Figuren 11 a, b und c: je eine Ansicht von vorn auf den Schlitten in einer Linkskurve, in Geradeausfahrt und in einer Rechtskurve.

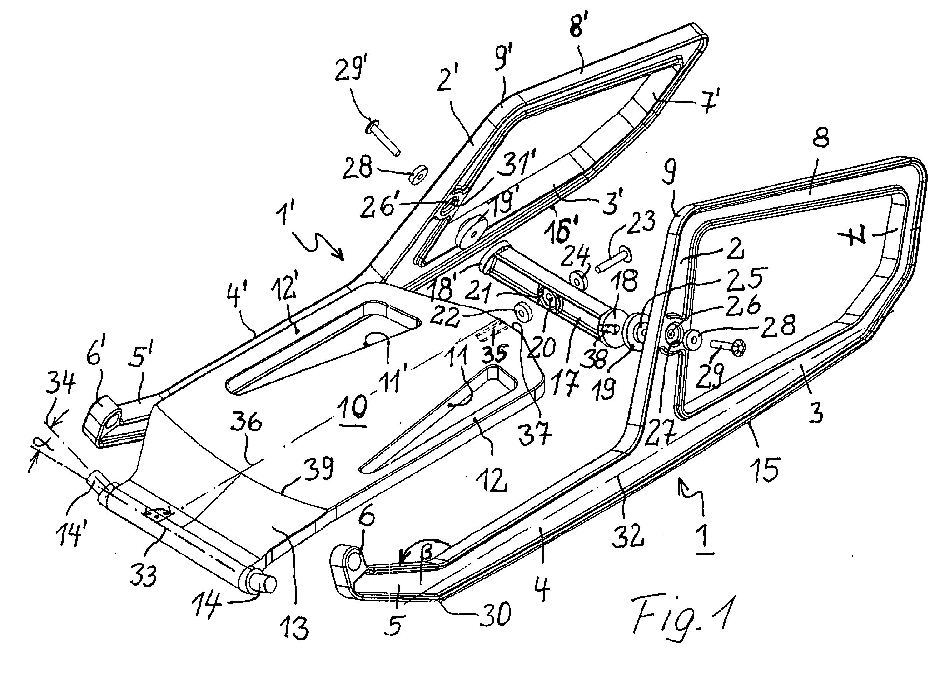

Ein Beispiel der Erfindung ist in der Zeichnung dargestellt und anschließend beschrieben. Die Figur 1 zeigt dabei in einer perspektivischen Explosionsansicht einen lenkbaren Schlitten, welcher im Wesentlichen aus zwei Kufen 1, 1', besteht, auf denen sich je eine nach oben gerichtete Strebe 2, 2' erhebt, zwischen denen zur Halterung der Kufen 1,1' sich eine Quertraverse 17 erstreckt. Im gezeigten Beispiel sind die Streben 2, 2' schräg nach vorn gerichtet, wobei die Streben 2, 2' die Kufen 1, 1' je in einen vorderen Teil 3, 3' und einen hinteren Teil 4, 4' aufteilen, und die vorderen Teile 3, 3' der Kufen 1,1' an ihren vorderen Enden 7, 7' nach oben gekrümmt sind.

An der Quertraverse 17 ist mittig eine Sitzschale 10 mit ihrem vorderen Ende 37 befestigt; im Bereich ihres hinteren Endes 13 stützt sich die Sitzschale 10 beidseitig auf den Kufen 1,1' ab und zwar auf den Enden 5, 5' der hinteren Teile 4, 4' einer jeden Kufe 1,1'.

Die Quertraverse 17 ist an ihren Enden gelenkig sowie elastisch bzw. mittels je eines elastischen Gelenks mit den Streben 2, 2' verbunden. Im gezeigten Beispiel besitzt die Quertraverse 17 je ein planes Ende 18, 18' im Sinne eines Auflagers, in welches sich zentrisch je eine Gewindebohrung 38, 38' erstreckt. Die elastische Verbindung der Quertraverse 17 mit den Streben 2, 2' besteht zum Beispiel aus je wenigstens einem ersten Elastikkörper 19, 19', welche jeweils auf den planen Enden 18, 18' der Quertraverse 17 aufliegen. Die scheibenförmigen ersten Elastikkörper 19, 19' weisen zentrisch angeordnete, einen kleineren Durchmesser aufweisende, vorzugsweise ebenfalls scheibenförmig geformte zweite Elastikkörper 25, 25' auf, welche hier integral mit den ersten Elastikkörpern 19, 19' verbunden sind, beispielsweise einstückig. Die Streben 2, 2' besitzen je ein Durchgangsloch 26, 26', wobei um das Durchgangsloch 26, 26' sowohl auf den Innenseiten der Streben 2, 2' als auch auf den Außenseiten derselben zentrisch je ein inneres Sackloch 31, 31' und je ein äußeres 27, 27' in die Streben 2, 2' eingelassen ist. Innerhalb der äußeren Sacklöcher 27, 27' sind scheibenförmige dritte Elastikkörper 28, 28' angeordnet; innerhalb der inneren Sacklöcher 31, 31' sitzen die zweiten Elastikkörper 25, 25' der ersten Elastikkörpern 19, 19'. Sämtliche Elastikkörper weisen eine zentrische Durchgangsbohrung auf, welche mit den Durchgangsbohrungen 26, 26' innerhalb der Streben 2, 2' fluchten. Durch sämtliche Durchgangsbohrungen der Elastikkörper sowie den Durchgangsbohrungen 26, 26' innerhalb der Streben 2, 2' ist, von der Außenseite der Streben ausgehend, je eine Kopfschraube 29, 29' gesteckt, welche in die jeweilige Gewindebohrung 38, 38' innerhalb der Quertraverse 17 geschraubt ist. Vorzugsweise hat der Schaft der Kopfschraube 29, 29' innerhalb des Durchgangsloch 26, 26' Spiel, so dass sich die Kopfschraube 29, 29' innerhalb des jeweiligen Durchgangsloches 26, 26' etwas bewegen bzw. verkanten und verschwenken kann, vorzugsweise dreidimensional, wobei die Elastizität der Elastikkörper 19, 19', 25, 25', 28, 28' ein Rückstellmoment beim Verkanten und Verschwenken des Querholms 17 gegenüber den Streben 2, 2' ausüben.

Die Sitzschale 10, welche bevorzugt starr bzw. verwindungssteif ist, ist im Bereich ihres vorderen, zur Quertraverse 17 gerichteten Endes 37 gelenkig drehbar um ihre Mittenlängsachse 36 in der Mitte der Quertraverse 17 an derselben gehaltert bzw. aufgehängt, dergestalt, dass die Sitzschale 10 längs um ihre Mittenlängsachse 36 kippbar ist.

Die Halterung der Sitzschale 10 kann dergestalt sein, dass durch die Quertraverse 17 mittig und horizontal ein Durchgangsloch 20 geführt ist, wobei auf beiden Seiten zentrisch zum Durchgangsloch 20 Sacklöcher 21, 21' eingebracht sind, in denen je eine Elastikscheibe 22, 24 angeordnet ist. Die Elastikscheiben 22, 24 weisen je eine zentrische Durchgangsbohrung auf, welche mit dem Durchgangsloch 20 innerhalb der Quertraverse 17 fluchten. Durch sämtliche Durchgangsbohrungen der Elastikscheiben 22, 24 sowie des Durchgangslochs 20 ist von der nach vorn weisenden Seite der Quertraverse 17 ausgehend eine Kopfschraube 23 gesteckt, welche in eine Gewindebohrung 35 innerhalb der Sitzschale 10 an deren vorderen Ende 37 geschraubt ist. Die Gewindebohrung 35 erstreckt sich längs der Mittenlängsachse 36 der Sitzschale 10. Vorzugsweise hat der Schaft der Kopfschraube 23 innerhalb des Durchgangsloches 20 Spiel, so dass sich die Kopfschraube 23 innerhalb des Durchgangsloches 20 etwas bewegen bzw. verkanten und verschwenken kann, wobei die Elastizität der Elastikscheiben 22, 24 ein Rückstellmoment beim Verkanten und Verschwenken der Sitzschale 10 gegenüber dem Querholm 17 ausüben. Somit ist die Sitzschale 10 um ihre Mittenachse 36 drehbar an ihrem vorderen Ende 37 sowie elastisch, vorzugsweise dreidimensional, aufgehängt.

Zum beidseitigen Abstützen des hinteren Endes 13 der Sitzschale 10 an den Kufen 1,1' weisen dieselben im Bereich ihrer äußeren Enden 5, 5' der hinteren Teile 4, 4' je eine Halterung 6 auf, welche je ein Durchgangsloch 6 bzw. ein Lager sein kann. Das hintere Ende 13 der Sitzschale 10 kann gegenüber derselben abgesenkt oder abgebogen sein, im vorliegenden Beispiel schräg nach unten hinten in Form einer Schürze verlaufend, wobei das Ende 13 der Sitzschale 10 in einer Querachse 33 endet, welche vorzugsweise senkrecht zur Mittenlängsachse 36 der Sitzschale 10 verläuft. Die Enden der Querachse 33 sind als Bolzen 14, 14' ausgebildet, welche in den Halterungen 6, 6' bzw. den Durchgangslöchern 6, 6' bzw. den Lagern sitzen.

Die Bolzen 14, 14' können entweder drehbar innerhalb der Halterungen 6, 6' angeordnet sein oder die Bolzen 14, 14' können fest in den Halterungen 6, 6' sitzen, wobei in diesem Fall die Achse 33 oder auch die endständigen Bolzen 14, 14' gegenüber den Halterungen 6, 6' der Kufen 1,1' tordierbar sind. Ebenso kann die beidseitige Halterung der Achse 33 an den Enden 5, 5' der Kufen 1, 1' bzw. an den Halterungen 6, 6' bzw. den Durchgangslöchern 6, 6' der Enden 5, 5' elastisch-beweglich sein. Wesentlich ist, dass eine Drehbewegung, welche klein sein kann, bezüglich des Endes 13 der Sitzschale 10 gegenüber den Kufen 1,1' möglich ist. Vorzugsweise verlaufen die Bolzen 14, 14' der Achse 33 in senkrechter Projektion unter einem rechten Winkel zur Mittenlängsachse 36 der Sitzschale 10. Die Kufen 1,1' mitsamt den vorderen Teilen 3, 3', den hinteren Teilen 4, 4' sowie deren Enden 5, 5' mitsamt den Halterungen 6, 6' liegen vorzugsweise in einer Ebene.

Jeweils die Enden 5, 5' der hinteren Teile 4, 4' einer jeden Kufe 1,1' können unter einem Winkel β von mehr als 90Grad, jedoch weniger als 180Grad, im gezeigten Beispiel ungefähr 160Grad, nach oben abgewinkelt sein unter Ausbildung eines Dreh- und Bremspunktes 30, 30' der Kufen 1,1' bezüglich des Bodens, nämlich zwischen dem Übergang der hinteren Teile 4, 4' einer jeden Kufe 1, 1' hin zu den Enden 5, 5' der Kufen 1,1'.

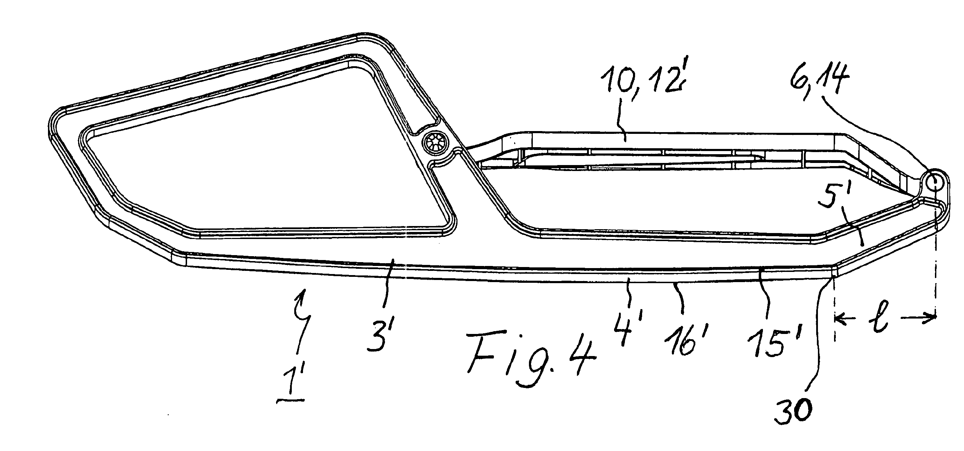

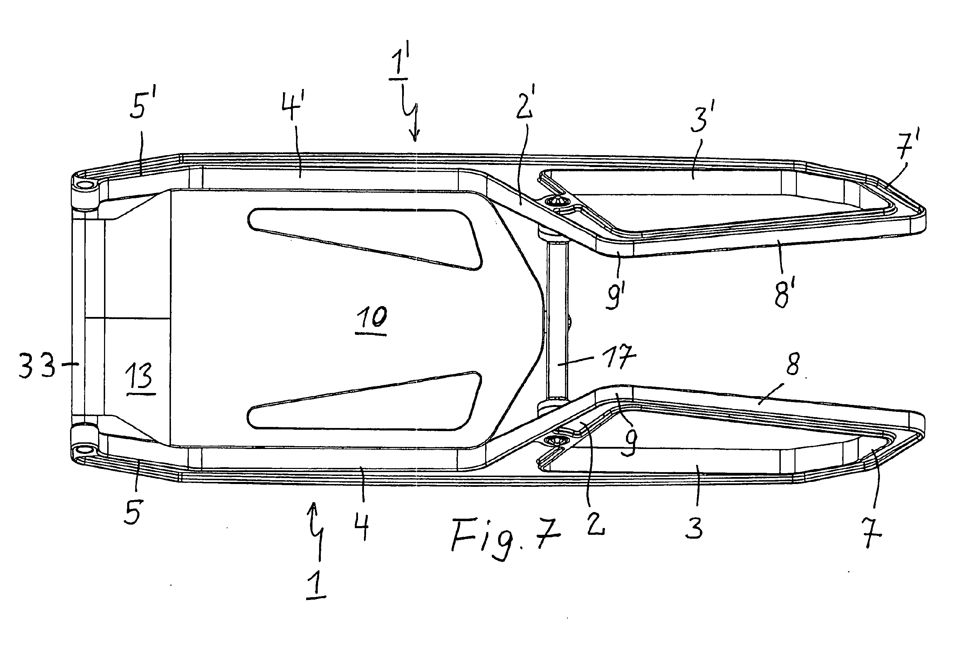

Die Abbiegung 39 des hinteren Teils 13 der Sitzschale 10 verläuft, in senkrechter Projektion gesehen, vorzugsweise im Bereich der Abbiegung der schräg nach oben abgebogenen Enden 5, 5' der hinteren Teile 4, 4' der Kufen 1,1' oder etwas dahinter - was insbesondere den Figuren 4 und 7 zu entnehmen ist - und somit beim Fahren im Bereich der dynamischen Dreh- und Bremspunkte 30, 30'. Die Abbiegung 39 der Sitzschale 10 bildet eine Begrenzung der Sitzfläche der Sitzschale 10 für den Fahrer. Damit wird verhindert, dass der Fahrer auf der Sitzschale 10 zu weit nach hinten rutscht. Beim Vorhandensein von abgebogenen Enden 5, 5' der hinteren Teile 4, 4' der Kufen 1, 1' würde das zur Folge haben, dass der Fahrer den Schlitten zum Kippen auf die abgebogenen Enden 5, 5' der hinteren Teile 4, 4' der Kufen 1,1' bringt, was natürlich zu verhindern ist.

Die vorbeschriebene Aufhängung der Sitzschale ist somit derart gestaltet, dass dieselbe mit zwei hinteren Aufhängepunkte verdrehbar an den Kufen 1,1' und mit einem vorderen Aufhängepunkt gelenkig, sowie vorzugsweise elastisch, an der Quertraverse 17 aufgehängt ist. Ebenso ist die Quertraverse 17 kippbar und schwenkbar elastisch mit den Streben 2,2' verbunden. Die Sitzschale 10 kann mittels eines elastischen Puffergliedes 22, 23, 24 oder eines Kugellagers sowohl um die Mittenlängsachse 36 der Sitzschale 10 kippbar als auch schwenkbar bezüglich der Quertraverse 17 elastisch mittig an derselben gehaltert sein, so dass sowohl die Quertraverse 17 bezüglich der Kufen 1,1' sich dreidimensional nach oben oder unten sowie vor und zurück zu bewegen imstande ist als auch die Sitzschale 10 neben ihrer Kippbewegung um die Mittenlängsachse 36 eine Schwenkbewegung, im Wesentlichen in der Hauptebene der Sitzschale 10, auszuführen imstande ist. Der gegenseitige Abstand der Halterungen 6, 6' ist allerdings durch den hinteren Teil 13 der Sitzschale 10 fest vorgegeben, so dass zwischen diesem Teil 13 und den Halterungen 6, 6' bzw. den Enden 5, 5' der Kufen 1,1' beim Abkippen der Sitzschale 10 auch die entsprechende Halterung 6, 6' nach unten gezwungen wird und vorzugsweise innerhalb der Halterung 6, 6' nur eine Drehbewegung oder Torsion möglich ist. Die Folge ist die Anhebung der entsprechenden Kufe 1,1' schräg nach vorn oben, so dass die Kufe 1, 1' im Wesentlichen auf ihrem dynamischen Dreh- und Bremspunkt 30, 30' gleitet.

Die von den relativ zueinander beweglichen Teilen ausgeführten Bewegungen haben einen relativ kleinen Ausschlag, aber ausreichend groß in der Weise, dass bei einer Gewichtsverlagerung des Fahrers unter mehr oder weniger leichtem Anheben der entsprechenden Kufe 1, 1', auch durch die entsprechende hand oder den entsprechenden Fuß, eine Links- oder Rechtskurve um die angehobene Kufe gefahren werden kann.

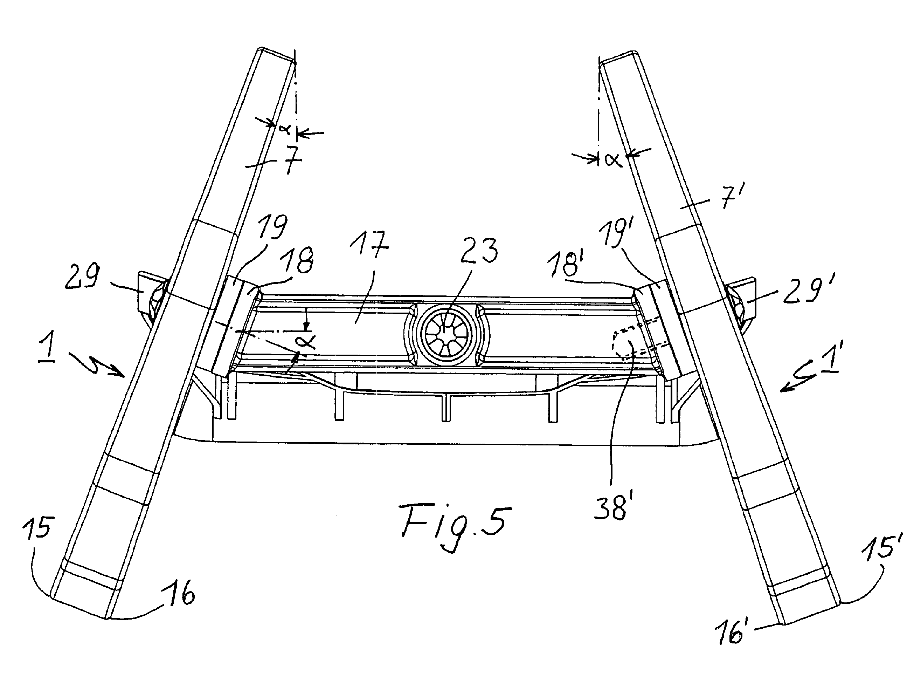

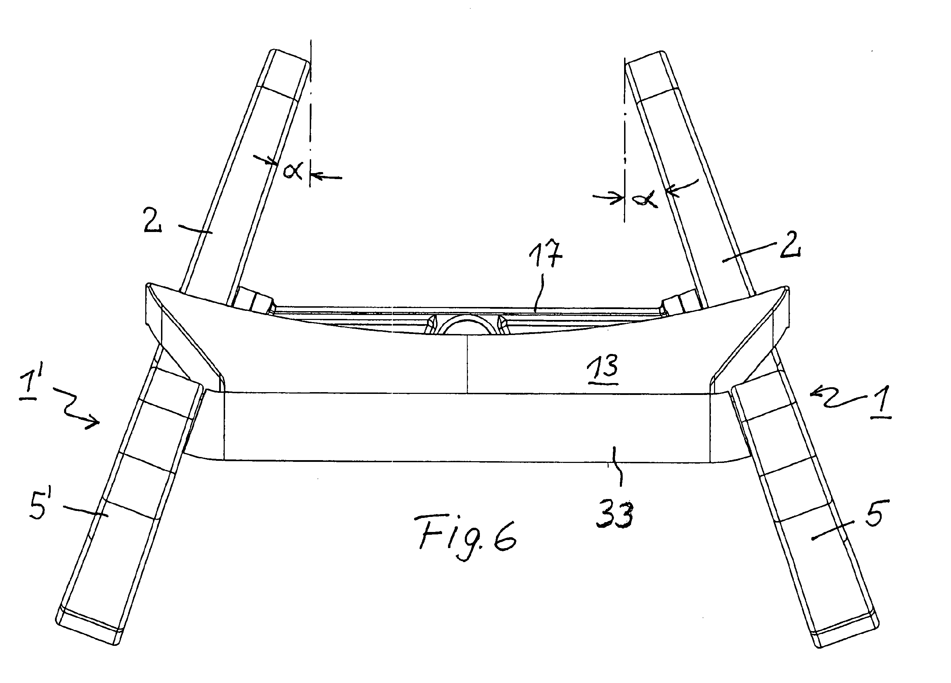

Die Kufen 1,1' des Schlittens sind vorzugsweise unter einem Winkel α zwischen 0Grad bis 45Grad, insbesondere 30Grad, geneigt zueinander angeordnet, wie in den Figuren 5 und 6 gezeigt, so dass die Kufen 1,1' hauptsächlich auf ihren Innenkanten 16, 16' gleiten. Vorzugsweise sind in diesem Fall auch die Streben 2, 2' zueinander unter dem gleichen Winkel αaus der Senkrechten heraus aufeinander zu geneigt. Dann sind, wie insbesondere aus den Figuren 1, 5 und 6 zu entnehmen ist, auch die endständig am hinteren Ende 13 der Sitzschale 10 angeordneten Bolzen 14, 14' unter dem Winkel α bezüglich der Querachse 33 der Sitzschale 10 schräg nach oben gerichtet, weil die die Bolzen 14, 14' aufnehmenden Halterungen 6, 6' der Enden 5, 5' der Kufen 1, 1' unter dem gleichen Winkel α in Bezug zum Boden hin geneigt sind. Ebenso sind die planen Enden 18, 18' der Quertraverse 17 unter dem gleichen Winkel α bezüglich der Quertraverse 17 geneigt, weil die Streben 2, 2' unter diesem Winkel α aufeinander zu geneigt sind.

Entsprechend dem hauptsächlichen Einsatzgebiet des Schlittens, ob dieser auf Eis oder auf weichem Schnee gefahren werden soll, kann der Winkel α größer (für Eis) oder kleiner (für weichen Schnee) gewählt werden, so dass der Schlitten mehr oder weniger nur auf den Innenkanten 16, 16' der Kufen 1,1' läuft und die Außenkanten 15, 15' nach oben weisen.

Gemäß der Figur 1 können die an ihren vorderen Enden 7, 7' schräg nach oben gebogenen Kufen 1,1' des Schlittens hin zu Streben 2,2' schräg nach oben verlaufend vorzugsweise mittels je einer Rückbiegungen 8, 8' rückgebogen und mit den Streben 2, 2' integral verbunden sein, wobei die Verbindungsteile zwischen den Rückbiegungen 8, 8' und den Streben 2, 2' als Haltebügel 9, 9' ausgebildet sind.

Es ist auch denkbar, statt der Streben wenigstens im vorderen Bereich der Kufen Wandungen vorzusehen, welche sich auf den Kufen erheben, so dass im Vergleich mit der Gestaltung in Figur 1 die dort gezeigten vorderen Enden, die Rückbiegungen und die Streben eine integrale Wandung bilden, welche geschlossen oder auch durchbrochen sein kann.

Der Figur 4 ist des Weiteren zu entnehmen, dass die Kufen 1,1' leicht konvex geformt sein können. Des Weiteren ist der Figur 4 insbesondere diejenige Ausgestaltung der Kufen 1,1' des Schlittens zu entnehmen, die eine besonders vorteilhafte Lenkung des Schlittens bedingt. Wie vorstehend ausgeführt besteht jede Kufe 1,1' aus einem vorderen Teil 3, 3' und einem hinteren Teil 4, 4', dessen rückwärtiger Endbereich 5, 5' unter einem Winkel β nach oben etwas abgewinkelt ist, wodurch im Übergang des Teils 4, 4' zum Endbereich 5, 5' ein Dreh- und Bremspunkt 30, 30' der Kufen 1, 1' bezüglich des Bodens ausgebildet ist. Dadurch ist zwischen dem Dreh- und Bremspunkt 30, 30' und der Halterung 6, 6' am äußersten, rückwärtigen Ende des Endbereichs 5, 5' bzw. der Kufe 1, 1' in Projektion in vertikaler Richtung ein Hebelarm der Länge I ausgebildet, wie es der Figur 4 zu entnehmen ist.

Bei Neigung des Fahrers - im Beispiel der Figur 4 - nach links dreht sich die Sitzschale 10 um die Mittenlängsachse 36 im Gegenuhrzeigersinn, wobei die linke Kante der Sitzschale 10, und somit der linke Haltegriff 12' derselben, abgesenkt wird. Da die Sitzschale 10 im Wesentlichen verwindungssteif ist, wird der Halterungspunkt 6' nach unten gedrückt. Es erfolgt eine Absenkung der Halterung 6' am äußersten Ende der Kufe 1', so dass sich die Kufe 1' um den Drehpunkt 30' dreht, welcher gleichzeitig als Bremspunkt wirkt. Das Übersetzungsverhältnis, mit welcher Kraft die Absenkung des Halterungspunktes 6' in Richtung zum Boden hin erfolgt, ist durch die Länge I des Hebelarmes vorgegeben.

Der Dreh- und Bremspunkt 30, 30' der Kufen 1, 1' kann nach hinten bis unter den Halterungspunkt 6, 6' der Endbereiche 5, 5' verlegt sein, was aber die Lenkungswirkung des Schlittens verschlechtert.

Es ist auch denkbar, dass der Dreh- und Bremspunkt der Kufen 1, 1' mit den Halterungspunkten 6, 6' der beidseitigen Enden der Sitzschale 10 in den rückwärtigen Enden der Kufen 1, 1' zusammenfällt. Dadurch ist immer noch in vorteilhafter Weise eine Lenkung des Schlittens durch Hochziehen einer der Kufen möglich, beispielsweise durch Hochziehen einer der Kufen mittels eines Fußes oder einer Hand, wodurch die entsprechende Kufe um ihr äußerstes rückwärtige Ende um den jeweiligen Halterungspunkt gedreht wird. Dieses Hochziehen einer der Kufen ist deshalb möglich, weil der gesamte Schlitten in seinen Gelenken beweglich gehaltert ist.

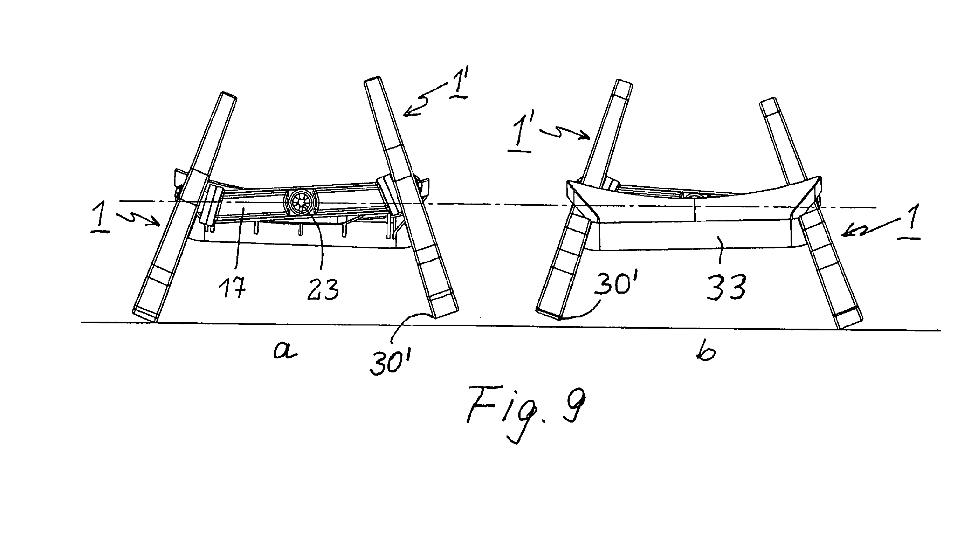

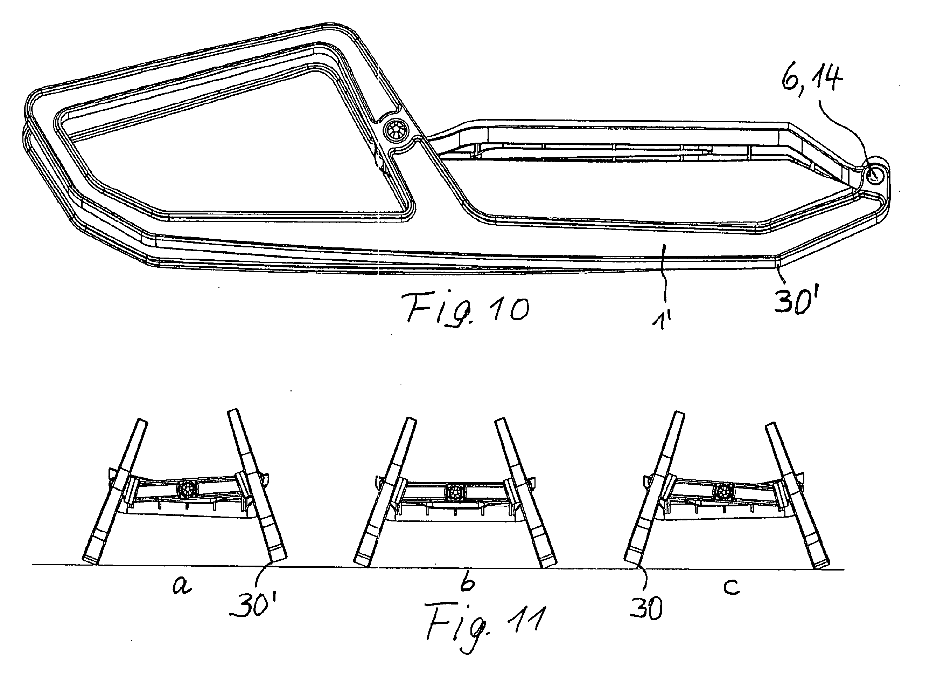

Die Figuren 9 a und b zeigen eine Ansicht von vorn und von hinten auf den Schlitten in einer Linkskurve. Man erkennt, dass in diesem Fall die linke Kufe 1' angehoben ist und dadurch schräg nach vorn oben verläuft, wie es insbesondere der Figur 10 zu entnehmen ist. Die Kufe 1' übt beim Fahren in einer Linkskurve den größten Druck auf den Boden im Bereich ihres dynamischen Dreh- und Bremspunktes 30' aus.

Die Figuren 11 a, b und c zeigen je eine Ansicht von vorn auf den Schlitten in einer Linkskurve, in Geradeausfahrt und in einer Rechtskurve. In der Linkskurve Figur 11 a ist die linke Kufe 1' angehoben und dreht den Schlitten um den dynamischen Dreh- und Bremspunktes 30' dieser Kufe 1'; in einer Rechtskurve Figur 11 c ist die rechte Kufe 1 angehoben und dreht den Schlitten um den dynamischen Dreh- und Bremspunktes 30 dieser Kufe 1.

Der Fahrer hat die Möglichkeit, die Kurven entweder durch Hochziehen der entsprechenden Kufe über die Haltebügel 9, 9' mittels der Hand auszuführen, auch mit Unterstützung durch den jeweiligen Fuß, oder der Fahrer hält sich an den Haltegriffen 12, 12' der Sitzschale und kippt dieselbe in die entsprechende Richtung nach unten. Wird die Sitzschale 10 nach links abgekippt - unterstützt natürlich durch das nach links geneigte Gewicht des Fahrers - so dreht sich die linke Kufe 1' um ihren dynamischen Dreh- und Bremspunktes 30' schräg nach oben und der Schlitten führt eine Linkskurve aus. Entsprechendes gilt für eine Rechtskurve.

Sämtliche Lagerungspunkte des Schlittens, die hinteren Halterungspunkte 6, 6' der Sitzschale 10 an den Enden der Kufen 1, 1', der mittige, vordere Aufhängungspunkt der Sitzschale 10 an der Quertraverse 17 wie auch die endseitigen Aufhängungspunkte der Quertraverse an den Streben 2, 2' der Kufen 1, 1' können elastische Pufferlager, wie Gummi- oder Kunststofflager, oder Kugellager oder Kardangelenke oder Torsionslager sein, welche eine gegenseitige Relativbewegung der einzelnen Teile des Schlittens zueinander, vorzugsweise mit Rückstellkraft, gestatten.

### Gewerbliche Anwendbarkeit:

Die Erfindung ist für den Bau von Schlitten gewerblich anwendbar. Die besondere Ausprägung des erfindungsgemäßen Schlittens besteht darin, dass die vier Teile, nämlich Kufen 1, 1', Quertraverse 17 und Sitzschale 10, mittels Gelenkverbindungen - die drei Aufhängepunkte der Sitzschale 10 und die beiden Aufhängepunkte der Quertraverse 17 an den Streben 2, 2' - relativ zueinander beweglich sind.

### Liste der Bezugszeichen:

- 1,1': Kufen
- 2, 2': Streben
- 3, 3': vordere Teile der Kufen
- 4, 4': hintere Teile der Kufen
- 5, 5': Endbereiche der hinteren Teile der Kufen
- 6, 6': Halterungen oder Durchgangslöcher an den rückwärtigen Endbereichen der Kufen (Torsions- oder Dreh- oder Kugellager)
- 7, 7': nach oben gebogene Enden der vorderen Teile der Kufen oder Bügel
- 8, 8': rückgebogene Teile an den nach oben gebogene Enden der vorderen Teile der Kufen
- 9, 9': Haltebügel
- 10: Sitzschale
- 11, 11': Aussparung
- 12, 12': Haltegriffe
- 13: hinterer Teil der Sitzschale, Schürze
- 14, 14': Rundbolzen
- 15, 15': Außenkanten der Kufen
- 16, 16': Innenkanten der Kufen
- 17: Quertraverse
- 18, 18': plane Enden der Quertraverse (Auflager)

- 19, 19', 25, 25', 28, 28': Elastikkörper
- 22,24: Elastikscheiben
- 20, 26, 26': Durchgangslöcher
- 23, 29, 29': Kopfschrauben
- 21, 21', 27, 27', 31, 31': Sacklöcher um die Durchgangsbohrungen herum
- 30, 30': dynamische Dreh- und Bremspunke beim Fahren
- 32: Längsachse der Kufen
- 33: Querachse des hinteren Teils der Sitzschale
- 34: Längsache der Rundbolzen
- 35: Gewindebohrung innerhalb der Sitzschale
- 36: Mittenlängsache in der Ebene der Sitzschale
- 37: vorderes Ende der Sitzschale
- 38, 38': Gewindebohrungen innerhalb der Quertraverse
- 39: Abbiegung
- α: Neigungswinkel der Streben zueinander gegenüber der Senkrechten sowie Winkel zwischen der hinteren Querachse der Sitzschale und der Richtung der Bolzen
- β: Winkel zwischen Kufe bzw. dem hinteren Teil der Kufe und dem Ende des hinteren Teils der Kufe

## Patentansprüche

1. Lenkbarer Schlitten mit zwei Kufen (1,1'), auf denen sich je eine nach oben gerichtete Strebe (2,2') oder eine Wandung erhebt, zwischen denen zur Halterung der Kufen (1,1') eine Quertraverse (17) sich erstreckt, an welcher eine Sitzschale (10) befestigt ist, welche sich im Bereich ihres hinteren Endes (13) beidseitig auf den Kufen (1,1') abstützt, welche zumindest an ihren vorderen Enden (7,7') nach oben gekrümmt sind,
**gekennzeichnet durch** die folgenden Merkmale:
- die Quertraverse (17) ist gelenkig mit den Streben (2,2') verbunden
- die Sitzschale ist im Bereich ihres vorderen Endes (37) gelenkig drehbar um ihre Mittenlängsachse (36) in der Mitte der Quertraverse (17) an derselben gehaltert, so dass die Sitzschale (10) längs um ihre Mittenlängsachse (36) kippbar ist
- zum Abstützen des hinteren Endes (13) der Sitzschale (10) an den Kufen (1,1') weisen die Kufen (1,1') im Bereich ihrer rückwärtigen Enden je eine Halterung (6, 6') auf, innerhalb oder an derselben jeweils ein beidseitig am hinteren Ende (13) der Sitzschale (10) angeordnete Gegenhalterung (14,14') gehaltert ist
- die Gegenhalterungen (14,14') sind gegenüber den an den Kufen (1,1') angeordneten Halterungen (6) in oder an denselben drehbar oder wenigstens tordierbar beweglich angeordnet
- so dass die Sitzschale (10) endseitig mit zwei Aufhängepunkte drehbar an den Kufen (1,1') und mit einem vorderen Aufhängepunkt gelenkig an der Quertraverse (17) aufgehängt ist.

2. Schlitten nach Anspruch 1, **dadurch gekennzeichnet,**
**dass** die Quertraverse (17) kippbar und schwenkbar elastisch mit den Streben (2,2') oder den Wandungen verbunden ist, wobei auch die Sitzschale (10) mittels eines elastischen Puffergliedes (22,23,24) oder eines Kugellagers sowohl um die Mittenlängsachse (36) der Sitzschale (10) kippbar als auch schwenkbar bezüglich der Quertraverse (17) elastisch mittig an derselben gehaltert ist, so dass sowohl die Quertraverse (17) bezüglich der Kufen (1,1') sich nach oben oder unten sowie vor und zurück dreidimensional zu bewegen imstande ist als auch die Sitzschale (10) um die Mittenlängsachse (36), neben ihrer Kippbewegung, eine Schwenkbewegung auszuführen imstande ist.

3. Schlitten nach Anspruch 1 oder 2, **dadurch gekennzeichnet, dass** sowohl die Quertraverse (17) elastisch beweglich mit den Streben (2,2') oder den Wandungen als auch die Sitzschale (10) elastisch beweglich mit der Quertraverse (17) verbunden ist.

4. Schlitten nach einem der vorherigen Ansprüche,
**dadurch gekennzeichnet, dass** die Quertraverse (17) mittels zweier endständig angeordneter Kardangelenke mit den Streben (2,2') oder den Wandungen verbunden ist, wobei auch die Sitzschale (10) mittels eines Kardangelenkes kippbar an der Quertraverse (17) gehaltert ist.

5. Schlitten nach einem der vorherigen Ansprüche,
**dadurch gekennzeichnet, dass** die elastische Verbindung der Quertraverse (17) mit den Streben (2,2') oder den Wandungen aus je wenigstens einem Elastikkörper (18,18',19,19',25, 25',28,28') zwischen den Enden der Quertraverse (17) und den Streben (2,2') oder den Wandungen besteht, wobei die Quertraverse (17) zwischen den Streben (2,2') oder den Wandungen mittels je einer Schraube (29,29') gehaltert ist, welche durch je eine Durchgangsbohrung (26,26') innerhalb der Streben (2,2') oder den Wandungen mit Spiel geführt und in Gewindebohrungen (38,38') der Quertraverse geschraubt sind.

6. Schlitten nach einem der vorherigen Ansprüche 1 bis 5,
**dadurch gekennzeichnet, dass** die elastische Kipp-Schwenkverbindung der Sitzschale (10) gegenüber der Quertraverse (17) aus wenigstens einem Elastikkörper (22,24) zwischen Sitzschale (10) und Quertraverse (17) besteht, wobei die Quertraverse (17) mittig eine Durchgangsbohrung (20) aufweist, durch welche als Achse eine in Richtung der Mittenlängsachse (36) der Sitzschale (10) verlaufende Schraube (23), gegebenenfalls mit Spiel, geführt ist, welche in eine Gewindebohrung (35) innerhalb der Sitzschale (10) geschraubt ist, wobei die Gewindebohrung (35) sich vom vorderen Ende (37) der Sitzschale (10) längs der Mittenlängsachse (36) derselben erstreckt.

7. Schlitten nach einem der vorherigen Ansprüche,
**dadurch gekennzeichnet, dass** die Streben (2,2') schräg nach vorn gerichtet sind und die Kufen (1,1') je in einen vorderen Teil (3,3') und einen hinteren Teil (4,4') aufteilen, wobei jeweils die Endbereiche (5,5') der hinteren Teile (4,4') der Kufen (1,1') unter einem Winkel (β) von mehr als 90Grad jedoch weniger als 180Grad nach oben abgewinkelt sind unter Ausbildung eines Dreh- und Bremspunktes (30,30') im Übergang zwischen den hinteren Teile (4,4') der Kufen (1,1') und den Endbereichen (5,5') der hinteren Teile (4,4') der Kufen (1,1') bezüglich des Bodens.

8. Schlitten nach einem der vorherigen Ansprüche,
**dadurch gekennzeichnet, dass** in senkrechter Draufsicht auf die Kufen (1,1') die Halterungen (6,6') der Kufen (1,1') zur endseitigen Halterung der Sitzschale (10) in rückwärtiger Richtung hinter den Dreh- und Bremspunkten (30,30') der Kufen (1,1') liegen unter Ausbildung eines Hebelarms (I) oder mit den Endpunkten der Kufen (1,1') zusammenfallen.

9. Schlitten nach einem der vorherigen Ansprüche,
**dadurch gekennzeichnet, dass** die endständig am hinteren Ende (13) der Sitzschale (10) angeordneten Gegenhalterungen Bolzen (14,14') sind, welche unter einem Winkel (α) von 0Grad bis 45Grad bezüglich der Querachse (33) der Sitzschale (10) bzw. des hinteren Teils (13) derselben schräg nach oben gerichtet sind, wobei die die Bolzen (14,14') aufnehmenden Halterungen (6,6') der Kufen (1,1') unter einem gleichen Winkel zum Boden hin geneigt sind.

10. Schlitten nach Anspruch 9,
**dadurch gekennzeichnet, dass** die Bolzen (14,14') in senkrechter Projektion unter einem rechten Winkel zur Mittenlängsachse (36) der Sitzschale (10) verlaufen.

11. Schlitten nach einem der vorherigen Ansprüche,
**dadurch gekennzeichnet, dass** die an ihren vorderen Enden (7,7') schräg nach oben gebogenen Kufen (1,1') hin zu den Streben (2,2') schräg nach oben verlaufend mittels je einer Rückbiegungen (8,8') rückgebogen und mit den Streben (2,2') integral verbunden sind, wobei die Verbindungsteile zwischen Rückbiegungen (8,8') und Streben (2,2') als Haltebügel (9,9') ausgebildet sind.

12. Schlitten nach einem der vorherigen Ansprüche,
**dadurch gekennzeichnet, dass** die Streben (2,2') nach oben zueinander hin nach innen gerichtet sind, wobei die Kufen (1,1') gleichfalls dergestalt zueinander geneigt sind, dass diese nur auf den Innenkanten der Kufen (1,1') laufen.

13. Schlitten nach Anspruch 12, **dadurch gekennzeichnet,**
**dass** die Streben (2,2') sowie die Kufen (1,1') unter einem Winkel (α) zwischen 0Grad bis 45Grad aus der Senkrechten heraus aufeinander zu geneigt sind und/oder leicht konvex geformt sind.

14. Schlitten nach einem der vorherigen Ansprüche,
**dadurch gekennzeichnet, dass** die Bolzen (14,14') die Enden einer Querachse (33) sind, welche sich am hinteren Teil (13) der Sitzschale (10) erstreckt und zur Mittenlängsachse (36) derselben senkrecht verläuft.

15. Schlitten nach einem der vorherigen Ansprüche,
**dadurch gekennzeichnet, dass** der hintere Teil (13) der Sitzschale (10) in Form einer Schürze nach hinten unten abgebogen ist, wobei die Abbiegung (39) in senkrechter Projektion im Bereich der Dreh- und Bremspunkte (30,30') der Kufen (1,1') oder im Bereich der Abbiegungen der Endbereiche (5,5') verläuft.

16. Schlitten nach einem der vorherigen Ansprüche,
**dadurch gekennzeichnet, dass** die Kufen (1,1') und die Sitzschale (10), gegebenenfalls auch die Quertraverse (17) aus einem Material bestehen, welches Karbon- oder Glasfasern oder beides enthält.

## Claims

1. A steerable sled comprising two runners (1, 1'), from each of which an upward oriented strut (2, 2') or wall rises and between which, in order to hold the runners (1, 1'), a transversal cross member (17) extends to which a seat (10) is attached which is supported on both sides in the area of its rear end (13) on the runners (1, 1') that are curved upward, at least at their front ends (7, 7'),
**characterized by** the following features:
• the transversal cross member (17) is connected to the struts (2, 2') in an articulated manner,
• in the area of its front end (37), the seat is held in the center of the transversal cross member (17) in such a way that it can be rotated in an articulated manner around its longitudinal center axis (36), so that the seat (10) can be tilted lengthwise around its longitudinal center axis (36),
• in order to support the rear end (13) of the seat (10) on the runners (1, 1'), the runners (1, 1') each have a holder (6, 6') in the area of their rear ends, and a counter-holder (14, 14') that is arranged on each side at the rear end (13) of the seat (10) is held in or on said holder (6, 6'),
• the counter-holders (14, 14') are arranged relative to the holders (6) on the runners (1, 1') in such a way that said counter-holders (14, 14') can move rotationally or at least torsionally in or on said holders (6),
• so that the seat (10) is attached rotatably at its end on the runners (1, 1') at two attachment points, and at one front attachment point in an articulated manner on the transversal cross member (17).

2. The sled according to Claim 1, **characterized in that**
the transversal cross member (17) is connected to the struts (2, 2') or to the wall so as to tilt and pivot elastically, whereby the seat (10) is also held elastically in the center of the transversal cross member (17) by an elastic cushioning member (22, 23, 24) or by a ball bearing so as to tilt around the longitudinal center axis (36) of the seat (10) and so as to pivot relative to said transversal cross member (17), so that the transversal cross member (17) can move three-dimensionally upward or downward as well as forward and backward relative to the runners (1, 1'), and moreover, the seat (10) is capable of executing a pivoting movement as well as a tilting movement around the longitudinal center axis (36).

3. The sled according to Claim 1 or 2, **characterized in that**
the transversal cross member (17) is elastically movably connected to the struts (2, 2') or to the walls and the seat (10) is elastically movably connected to the transversal cross member (17).

4. The sled according to any of the preceding claims, **characterized in that** the transversal cross member (17) is connected to the struts (2, 2') or to the walls by means of two cardan joints arranged at the ends, whereby the seat (10) is also held on the transversal cross member (17) by means of a cardan joint so as to tilt.

5. The sled according to any of the preceding claims, **characterized in that** the elastic connection of the transversal cross member (17) to the struts (2, 2') or to the walls consists of at least one elastic element (18, 18', 19, 19', 25, 25', 28, 28') between the ends of the transversal cross member (17) and the struts (2, 2') or the walls, whereby the transversal cross member (17) is held between the struts (2, 2') or the walls by means of a screw (29, 29'), that passes with play through a through hole (26, 26') in the struts (2, 2') or in the walls and that is screwed into threaded holes (38, 38') in the transversal cross member.

6. The sled according to any of the preceding Claims 1 to 5, **characterized in that** the elastic tilt-pivot connection of the seat (10) relative to the transversal cross member (17) consists of at least one elastic element (22, 24) between the seat (10) and the transversal cross member (17), whereby the transversal cross member (17) has a through hole (20) in the center through which, as an axis, a screw (23) running in the direction of the longitudinal center axis (36) of the seat (10) passes, optionally with play, said screw being screwed into a threaded hole (35) in the seat (10), whereby the threaded hole (35) extends from the front end (37) of the seat (10) along the longitudinal center axis (36) thereof.

7. The sled according to any of the preceding claims, **characterized in that** the struts (2, 2') are oriented forward at a slant, and they divide each of the runners (1, 1') into a front part (3, 3') and a rear part (4, 4'), whereby each of the end areas (5, 5') of the rear parts (4, 4') of the runners (1, 1') are angled upward at an angle (_) of more than 90° but less than 180°, thereby forming a turning and braking point (30, 30') in the transition between the rear parts (4, 4') of the runners (1, 1') and the end areas (5, 5') of the rear parts (4, 4') of the runners (1, 1') relative to the ground.

8. The sled according to any of the preceding claims, **characterized in that**, in a perpendicular top view onto the runners (1, 1'), in order to hold the end of the seat (10) in the backward direction, the holders (6, 6') of the runners (1, 1') are situated behind the turning and braking points (30, 30') of the runners (1, 1'), thereby forming a lever arm (I), or else the holders (6, 6') coincide with the end points of the runners (1, 1').

9. The sled according to any of the preceding claims, **characterized in that** the counter-holders arranged at the ends on the rear end (13) of the seat (10) are bolts (14, 14') that are oriented upward at a slant at an angle (_) of 0° to 45° relative to the crosswise axis (33) of the seat (10) or to the rear part (13) thereof, whereby the holders (6, 6') that are on the runners (1, 1') and that accommodate the bolts (14, 14') are slanted at an equal angle relative to the ground.

10. The sled according to Claim 9, **characterized in that**
the bolts (14, 14') run in a perpendicular projection at a right angle relative to the longitudinal center axis (36) of the seat (10).

11. The sled according to any of the preceding claims, **characterized in that** the runners (1, 1') - whose front ends (7, 7') are angled upward at a slant - are each bent back toward the struts (2, 2') so as to run upward at a slant in the form of a backward bend (8, 8') and they are integrally connected to the struts (2, 2'), whereby the connecting parts between the backward bends (8, 8') and the struts (2, 2') are configured as holding bars (9, 9').

12. The sled according to any of the preceding claims, **characterized in that** the struts (2, 2') are oriented upward and facing inward toward each other, whereby the runners (1, 1') are likewise° slanted with respect to each other in such a way that they only run on the inner edges of the runners (1, 1').

13. The sled according to Claim 12, **characterized in that**
the struts (2, 2') as well as the runners (1, 1') are slanted toward each other at an angle (_) between 0° and 45° from the vertical and/or are slightly convex in shape.

14. The sled according to any of the preceding claims, **characterized in that** the bolts (14, 14') are the ends of a crosswise axis (33) that extends at the rear part (13) of the seat (10) and that runs perpendicular to the longitudinal center axis (36) thereof.

15. The sled according to any of the preceding claims, **characterized in that** the rear part (13) of the seat (10) is angled down toward the back in the form of an apron, whereby the bend (39) runs in a perpendicular projection in the area of the turning and braking point (30, 30') of the runners (1, 1') or else in the area of the bends of the end areas (5, 5').

16. The sled according to any of the preceding claims, **characterized in that** the runners (1, 1') and the seat (10), and optionally also the transversal cross member (17), are all made of a material containing carbon fibers or glass fibers or both.

## Revendications

1. Luge dirigeable avec deux patins (1,1') surmontés chacun d'un montant (2,2') dirigé vers le haut ou d'une paroi, entre lesquels s'étend, pour maintenir les patins (1,1'), une traverse transversale (17) à laquelle est fixée une coque de siège (10) qui s'appuie, dans la zone de son extrémité arrière (13), des deux côtés sur les patins (1,1'), lesquels sont courbés vers le haut, au moins en leurs extrémités avant (7,7'),
**caractérisée par** les caractères distinctifs suivants :
- la traverse transversale (17) est reliée par articulation aux montants (2,2'),
- la coque de siège peut, dans la zone de son extrémité avant (37), tourner par articulation autour de son axe longitudinal médian (36) au milieu de la traverse transversale (17) sur laquelle elle est montée, de sorte que la coque de siège (10) est basculable dans le sens de la longueur autour de son axe longitudinal médian (36),
- pour l'appui de la zone arrière (13) de la coque de siège (10) sur les patins (1,1'), les patins (1,1') présentent chacun dans la zone de leurs extrémités arrière un support (6,6') à l'intérieur duquel ou sur lequel est monté un contre-support (14,14') disposé sur chacun des côtés à l'extrémité arrière (13) de la coque de siège (10),
- les contre-supports (14,14') sont disposés de façon mobile par rapport aux supports (6,6') disposés sur les patins (1,1'), pouvant tourner ou au moins effectuer un mouvement de torsion à l'intérieur ou contre lesdits supports,
- de sorte que la coque de siège (10) est suspendue côté arrière en deux points de suspension, pouvant tourner vers les patins (1,1'), et en un point de suspension à l'avant, par articulation à la traverse transversale (17).

2. Luge selon la revendication 1, **caractérisée en ce que**
la traverse transversale (17) est reliée aux montants (2,2') ou aux parois de façon élastique en pouvant basculer ou pivoter, la coque de siège (10) pouvant elle aussi, moyennant un élément tampon élastique (22,23,24) ou un roulement à billes, tant basculer autour de l'axe médian longitudinal (36) de la coque de siège (10) que pivoter par rapport à la traverse transversale (17) sur laquelle elle est montée de façon élastique en son milieu, de sorte que aussi bien la traverse transversale (17) est en mesure de bouger tridimensionnellement vers le haut ou vers le bas tout comme en avant et en arrière par rapport aux patins (1,1'), que la coque de siège (10) est elle aussi en mesure d'effectuer en plus de son mouvement de bascule un mouvement de pivotement autour de l'axe médian longitudinal (36).

3. Luge selon la revendication 1 ou 2, **caractérisée en ce que**
aussi bien la traverse transversale (17) est reliée aux montants (2,2') ou aux parois de façon élastique et mobile que la coque de siège (10) est reliée de façon élastique et mobile à la traverse transversale (17).

4. Luge selon l'une des revendications précédentes, **caractérisée en ce que**
la traverse transversale (17) est reliée aux montants (2,2') ou aux parois moyennant deux articulations à Cardan disposées à ses extrémités, la coque de siège (10) étant elle aussi montée sur la traverse transversale (17) en pouvant basculer, moyennant une articulation à Cardan.

5. Luge selon l'une des revendications précédentes, **caractérisée en ce que**
la liaison élastique de la traverse transversale (17) aux montants (2,2') ou aux parois consiste en au moins un corps élastique (18,18',19,19',25,25',28,28') entre les extrémités de la traverse transversale (17) et les montants (2,2') ou les parois, la traverse transversale (17) étant montée entre les montants (2,2') ou les parois au moyen d'une vis (29,29') respectivement, lesquelles vis sont introduites en laissant du jeu à travers les trous de perçage respectifs (26,26') à l'intérieur des montants (2,2') ou des parois et vissées dans les taraudages filetés (38,38') de la traverse transversale.

6. Luge selon l'une des revendications précédentes 1 à 5, **caractérisée en ce que**
la liaison élastique pour le pivotement et le basculement de la coque de siège (10) par rapport à la traverse (17) consiste en au moins un corps élastique (22,24) entre la coque de siège (10) et la traverse transversale (17), la traverse transversale (17) présentant en son milieu un trou de perçage (20) à travers lequel passe une vis (23), au besoin avec du jeu, en tant qu'axe dans le sens de l'axe longitudinal médian (36) de la coque de siège (10), laquelle vis est vissée dans un taraudage fileté (35) à l'intérieur de la coque de siège (10), le taraudage fileté (35) s'étendant depuis l'extrémité avant (37) de la coque de siège (10) le long de l'axe longitudinal médian (36) de cette dernière.

7. Luge selon l'une des revendications précédentes, **caractérisée en ce que**
les montants (2,2') sont dirigés inclinés vers l'avant et que les patins (1,1') se divisent chacun en une partie avant (3,3') et une partie arrière (4,4'), chacune des zones terminales (5,5') des parties arrière (4,4') des patins (1,1') étant coudée vers le haut à un angle (β) de plus de 90 degrés et toutefois inférieur à 180 degrés en formant un point pivot et de freinage (30,30') à la transition entre les parties arrière (4,4') des patins (1,1') et les zones terminales (5,5') des parties arrière (4,4') des patins (1,1') par rapport au sol.

8. Luge selon l'une des revendications précédentes, **caractérisée en ce que**
dans une vue en plan sur les patins (1,1'), les supports (6, 6') des patins (1,1') se situent vers le support côté arrière de la coque de siège (10), dans le sens arrière, derrière les points pivot et de freinage (30,30') des patins (1,1'), formant un bras de levier (1) ou en coïncidant avec les points de terminaison des patins (1,1').

9. Luge selon l'une des revendications précédentes, **caractérisée en ce que**
les contre-support disposés à l'extrémité arrière (13) de la coque de siège (10) sont des goujons (14,14'), lesquels sont dirigés inclinés vers le haut à un angle (α) de 0 degrés à 45 degrés par rapport à l'axe transversal (33) de la coque de siège (10) ou de la partie arrière (13) de celle-ci, les supports (6,6') des patins (1,1') logeant les goujons (14,14') étant inclinés à un même angle par rapport au sol.

10. Luge selon la revendication 9, **caractérisé en ce que**
les goujons (14,14') suivent une projection verticale à angle droit par rapport à l'axe longitudinal médian (36) de la coque de siège (10).

11. Luge selon l'une des revendications précédentes, **caractérisé en ce que**
les patins (1,1') courbés inclinés vers le haut en leurs extrémités avant (7,7'), sont recourbés en direction des montants (2,2') moyennant une courbure arrière respective (8,8') suivant une allure inclinée vers le haut et sont intégralement reliés aux montants (2,2'), les pièces de raccordement entre les courbures arrière (8,8') et les montants (2,2') étant conformées en étrier de retenue (9,9').

12. Luge selon l'une des revendications précédentes, **caractérisée en ce que**
les montants (2,2') sont dirigés l'un vers l'autre en direction de l'intérieur vers le haut, les patins (1,1') étant également inclinés de la même façon l'un vers l'autre de sorte que ceux-ci ne glissent que sur les carres intérieures des patins (1,1').

13. Luge selon la revendication 12, **caractérisée en ce que**
les montants (2,2'), de même que les patins (1,1') sont inclinés l'un vers l'autre à un angle (α) de 0 degrés à 45 degrés partant de la verticale et/ou ont une forme légèrement convexe.

14. Luge selon l'une des revendications précédentes, **caractérisée en ce que**
les goujons (14,14') sont les extrémités d'un axe transversal (33) qui s'étend à la partie arrière (13) de la coque de siège (10) verticalement à l'axe longitudinal médian (36) de celle-ci.

15. Luge selon l'une des revendications précédentes, **caractérisée en ce que**
la partie arrière (13) de la coque de siège (10) est coudée vers l'arrière en bas en forme de tablier, le coudage (39) suivant une projection parallèle dans la zone des points pivot et de freinage (30,30') des patins (1,1') ou dans la zone des courbures des extrémités (5,5').

16. Luge selon l'une des revendications précédentes, **caractérisée en ce que**
les patins (1,1') et la coque de siège (10), ainsi qu'au besoin la traverse transversale (17) consistent en un matériau qui contient des fibres de carbone ou des fibres de verre.
